# EUROPEAN PATENT APPLICATION

(11) **EP 4 252 539 A1**
(43) Date of publication of application: **04.10.2023**
(21) Application number: 22166356.0
(22) Date of filing: 01.04.2022
(51) Int. Cl.: A23F 3/06, A23F 3/08

(54) **A PROCESS FOR PRODUCING A TEA PRODUCT**

(71) Applicant: Ekaterra Research and Development UK Limited, London EC4Y 0DY (GB)
(72) Inventor: The designation of the inventor has not yet been filed
(74) Representative: Mewburn Ellis LLP

(57) **Abstract**

The present invention relates to a process of producing a tea product. More particularly the present invention relates to a process of producing a cold-water infusible leaf tea product with rich red colour. Accordingly, the present invention provides a process for producing a tea product comprising the steps of contacting tea leaves with 0.1 to 10% by weight of a base for about 30 minutes to 6 hours.

## Description

### Field of the invention

The present invention relates to a process for producing a tea product. More particularly the present invention relates to a process for producing a cold-water infusible leaf tea product with rich red colour.

### Background of the invention

Tea is one of the most popular beverages in the world. There are varieties of tea available in the market e.g., black tea, green tea, oolong tea, white tea, *etc.* Out of these, black tea is most prevalent. One hand, black tea can be consumed with or without milk as a hot beverage. On the other hand, black tea also can be consumed at room temperature or as a cold beverage. There are varied practices between the consumers of different part of the world.

Black tea is predominantly characterized by its rich red coloured infusion. One of the problems associated with black tea beverages prepared in cold water is that the tea infusion lacks colour. This is because tea solids which are responsible for rich red coloured tea infusions are soluble only at high temperature. Therefore, a reduction in the brewing temperature results in lower solubility of the solids that are responsible for colour generation.

There is prior art, which discloses cold water infusible tea products and their characteristics.

WO 00/47056 (Unilever, 2000) discloses leaf product which brews in cold water to produce an iced tea beverage with the color and flavor of iced teas prepared by hot brewing methods. The product when brewed in water at about 15°C for about 5 minutes at a water to tea ratio of 100 water to 1 tea has a cold water infusion Hunter L Value of about 25 to 45; a Hunter "a" value of about 24 to 34; a Hunter haze value of less than 40 and at least 0.15 % soluble tea solids.

US 4051264 (Thomas J. Lipton, Inc., 1977) discloses cold water extractable tea leaf prepared by treatment of fresh green tea with the enzyme tannase under anaerobic conditions. This prior art particularly discloses a process wherein fresh tea leaf is subjected to withering, followed by comminution and then tannase is added along with KOH. After this, the fermentation stage is done under covered condition (anaerobic).

Although few prior arts disclose improving the colour of cold-water extractable tea, we found that the resulting colour of the cold-water extractable tea may further be improved. In addition, use of enzymes, in particularly tannase, results in enhancement of the acidity of the tea product because of production of free gallic acid because of tannase treatment.

Tea is also a cheap product with a relatively low profit margin. For this reason, the processing of tea needs to be both cheap and easily implementable.

Therefore, there is a need to provide a cold-water infusible tea product that provides an infusion with enhanced red colour, but also at a low cost using cheap and readily available materials.

The present inventors have surprisingly found out that a process comprising a treatment with selected bases and for a particular time frame and at a particular stage is able to provide a cold-water extractable tea product with enhanced and improved red colour. Furthermore, the present inventors also surprisingly found that the resulting tea product also provides enhanced colour in a hot infusion.

Treating teas with bases is generally known. However, treating tea with base is generally used for distinctly different purposes, using different bases, amounts and at different stages of the tea processing procedure to the process identified by the present inventors.

For example, CN107494806 (SANJIANG DONG AUTONOMOUS COUNTY BUYANG TEA IND CO LTD, 2017) discloses processing of tea leaves by treating it with sodium carbonate or baking soda after plucking, followed by washing it with clean water and then carrying out the regular tea processing. This is directed towards removal of pesticides from the tea leaves. This prior art completely silent about enhancement of colour of the tea product.

Thus, the process of the present invention provides a novel solution to the problem of providing a cold-water infusible tea product, at low cost, that provides an infusion with enhanced red colour.

### Summary of the invention

Accordingly, in a first aspect there is provided a process for the preparation of a leaf tea product comprising the steps of contacting tea leaves with 0.1 to 10% by weight of a base for about 30 minutes to 6 hours.

In a second aspect there is provided a process for producing a tea product comprising the steps of;
a) providing fresh tea leaves with moisture content of at least 65% by weight;
b) optionally, subjecting the incubated leaf to a step of comminution;
c) adding 1 to 10% by weight of a base to the comminuted tea leaves;
d) fermenting the comminuted tea leaves for about 30 minutes to 6 hours; and
e) drying the fermented tea leaves to obtain the tea product.

In a third aspect there is provided a process for producing a tea product comprising the steps of;
a) providing finished tea product with moisture content of less than 5%;
b) adding 1 to 10% by weight of a base to obtain a mix;
c) incubating the mix for about 30 minutes to 5 hours.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per* se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The disclosure of the invention as found herein will be understood to cover all embodiments as found in the claims and as discussed hereinbelow.

Where a feature is disclosed with respect to a particular aspect of the invention (for example in relation to one specific process of the invention), such disclosure is also to be considered to apply to any other aspect of the invention (for example in relation to any other process of the invention) *mutatis mutandis.*

The present invention provides a process for producing a tea product comprising the steps of contacting tea leaves with 0.1 to 10% by weight of a base for about 30 minutes to 6 hours.

It will be appreciated that the tea leaves may be fresh tea leaves from a tea plant or a finished tea leaf product.

When the tea leaves are fresh tea leaves, preferably have they a moisture content of more than 30%, preferably more than 50%, still more preferably more than 60%, and most preferably more than 65%.

When the tea leaves are a finished leaf tea product, preferably the finished leaf tea product has a moisture content of less than 5%, preferably less than 3%.

Finished leaf tea product preferably means tea leaves which has undergone the tea manufacturing process and ready for consumption. One of such process is black tea manufacturing process. In black tea manufacturing process fresh tea leaves first undergoes withering. After the withering step, the withered tea leaf undergoes maceration (a process of size reduction) followed by fermentation. After fermentation a drying step is performed to produce a black leaf tea product with less than 5% moisture content.

In one of the embodiments of the present invention the fresh tea leaves with moisture content of more than 65% by weight, is contacted with 0.1 to 10% by weight of a base for about 30 minutes to 6 hours.

The process of contacting includes but not limited to, spraying, dipping, submerging etc. In certain embodiments, the tea leaves are contacted with the base by spraying. Preferably, the contacting time is in the range from 70 minutes to 5 hours, more preferably from 80 minutes to 4 hours and most preferably from 90 minutes to 3 hours.

In an alternate embodiment of the present invention the macerated tea leaves are contacted with 0.1 to 10% by weight of a base for about 30 minutes to 6 hours. These macerated tea leaves are preferably produced by comminuting fresh tea leaves with moisture content of more than 65% by weight.

In yet another embodiment of the present invention preferably finished leaf tea products with moisture content of less than 5% by weight are contacted with 0.1 to 10% by weight of a base for about 30 minutes to 6 hours.

In the most preferred embodiment, the tea leaves are contacted with 0.1 to 10% by weight of a base directly before or during fermentation. That is, for example, there is no step of washing between the contacting the tea leaves with base and fermentation. In certain embodiments, the tea leaves are contacted with 0.1 to 10% by weight of a base during fermentation. That is, the base is present during the fermentation step.

The base used in the process of the present invention having pKb value greater than 4.68, preferably greater than 5, furthermore preferably greater than 5.5. The pKb value of the base preferably in the range from 4.68 - 9, preferably 5 - 9 and most preferably from 5.5 to 9.

Preferably the base is selected from sodium carbonate, sodium bicarbonate, potassium carbonate, potassium bicarbonate and mixtures thereof. The most preferred base is potassium bicarbonate.

The amount of base is in the range from 0.1 to 10%, preferably 1 to 8%, more preferably 1 to 6%, still more preferably, 1 to 5% and most preferably 1 to 3% by weight.

In certain embodiments, the amount of base is in the range from 2 to 8% and suitably 3 to 7% by weight.

It will be appreciated that the % by weight of base corresponds to the % based on the dry weight of the tea leaves (e.g. the dry weight of the fresh tea leaves or finished leaf tea product).

The present invention also provides a process for producing a tea product comprising the steps of;
a) providing fresh tea leaves with moisture content of at least 65% by weight;
b) optionally, subjecting the tea leaves to a step of comminution.
c) adding 1 to 10% by weight of a base to the comminuted tea leaves;
d) fermenting the comminuted tea leaves for about 30 minutes to 6 hours; and
e) drying the fermented tea leaves to obtain the tea product.

The fresh tea leaf may be obtained from *Camellia sinensis var. sinensis* and/or *Camellia sinensis var. assamica.* The moisture content of the fresh tea leaves is at least 65%. Preferably the moisture content of the fresh tea leaves is in the range from 65 to 85%, more preferably from 70 to 85% and most preferably from 70 to 80% by weight.

In a preferred embodiment, step b) is present.

In step b), the fresh tea leaves are subjected to comminution. This step of size reduction is preferably carried out by crushing, tearing and curling (known in the art of tea processing as CTC). One or more CTC steps may be carried out. In this step the leaf breaks up and releases enzymes that exist in the leaf. The comminuted tea leaves also known as dhool.

In embodiments where step b) is absent, the process may comprise a step of creating micropores having diameter in the range of 5 to 100 µm on the fresh tea leaves.

Preferably the micropores have a diameter ranging from 5 to 90 µm, more preferably 20 to 80 µm and most preferably 30 to 70 µm.

The micropores can preferably be created by using a technique selected from the group consisting of lasers, sand blasting, dry ice blasting, micropins, electroporation, and combinations of one or more thereof.

Preferably, the micropores are created using micropins.

The number of micropores is preferably in the range of 200 to 400 per cm² of tea leaf, more preferably 250 to 400 cm² of tea leaf per and most preferably 300 to 400 per cm² of tea leaf.

Preferably, there is an additional step of withering of fresh tea leaves before comminution.

After comminution (step b), there is a step of addition of base. The amount of base is in the range from 0.1 to 10%, preferably 1 to 8%, more preferably 2 to 8% and most preferably 3 to 7% by weight. Preferably the base is selected from sodium carbonate, sodium bicarbonate, potassium carbonate, potassium bicarbonate and mixtures thereof. The most preferred base is potassium bicarbonate.

After the addition of base, the comminuted tea leaves undergoes fermentation. Fermentation is preferably carried out by keeping the leaf at a temperature of 10°C to 60°C for 30 minutes to 6 hours. Preferably, the temperature of the fermentation is between 25 to 45°C and more preferably 25 to 40°C. The time for fermentation is preferably 45 minutes to 5 hours, more preferably 1 to 4 hours and most preferably 1 to 3 hours.

After fermentation, drying is performed to obtain the tea product of the invention. During the drying step, the fermented dhool is preferably dried to moisture content of less than 10% by total mass of the tea leaf, more preferably less than 5 % by total mass of the tea leaf, to obtain the leaf tea product. The drying preferably be performed at a temperature in the range of 80 to 160°C, more preferably 90 to 150°C, most preferably 100 to 130°C.

The drying step is preferably carried out by thermal drying, freeze drying or vacuum drying.

The present invention also provides a process for producing a tea product comprising the steps of;
a) providing a finished leaf tea product with moisture content of less than 5%;
b) adding 1 to 10% by weight of a base to obtain a mix;
c) incubating the mix for about 30 minutes to 6 hours.

Finished leaf tea product preferably means tea leaves which has undergone the tea manufacturing process and ready for consumption. The moisture content of the finished leaf tea product is less than 5%, more preferably less than 4% and most preferably less than 3% by weight.

A base is added to this finished leaf tea product. The amount of base is in the range from 0.1 to 10%, preferably 1 to 8%, more preferably 2 to 8% and most preferably 3 to 7% by weight. Preferably the base is selected from sodium carbonate, sodium bicarbonate, potassium carbonate, potassium bicarbonate and mixtures thereof. The most preferred base is potassium bicarbonate.

The time for incubation of the finished leaf tea product with the base preferably is in the range from contacting time is in the range from 70 minutes to 5 hours, more preferably from 80 minutes to 4 hours and most preferably from 90 minutes to 3 hours.

The present invention will now be demonstrated by way of non-limiting examples below. The examples are for illustration only and do not limit the scope of the invention in any manner.

### Examples:

### Preparation of different tea products

Different tea products were prepared starting from fresh tea leaves obtained from tea plantation in Kenya (Kericho) and using the following procedure:

### Example A:

Fresh tea leaves were harvested from a Kenyan tea garden. The moisture content of the tea product was around 78%. After that the tea leaves were withered for 72 hours at a temperature of 25°C. The moisture content of the tea product after withering was 66%. After the tea leaves were subjected to CTC (cut tear curl) for 4 times to obtain macerated dhool. The macerated dhool was then fermented (exposed to air at 25°C) for 90 minutes and then dried to a moisture content of less than 5% by weight (at 140°C) to obtain a black leaf tea product.

### Example B:

Fresh tea leaves (200 g) were harvested from a Kenyan tea garden. The moisture content of the tea product was around 78%. After that the tea leaves were withered for 72 hours at a temperature of 25°C. The moisture content of the tea product after withering was 66%. After that the tea leaves were immersed in 5% sodium bicarbonate solution (3000 mL) for 60 minutes followed by removing the leaves from the solution and immersed in fresh water for 45 minutes. After that the leaves were removed from fresh water and dried to remove surface moisture. Then the leaves were subjected to CTC (cut tear curl) for 4 times to obtain macerated dhool. The macerated dhool was then fermented (exposed to air at 25°C) for 90 minutes and then dried to a moisture content of less than 5% by weight (at 140°C) to obtain a black leaf tea product.

### Example 1:

Fresh tea leaves (200 g) were harvested from a Kenyan tea garden. The moisture content of the tea product was around 78%. After that the tea leaves were withered for 72 hours at a temperature of 25°C. The moisture content of the tea product after withering was 66%. Then the leaves were subjected to CTC (cut tear curl) for 4 times to obtain macerated dhool. After that 5% (W/V) sodium bicarbonate solution (40 mL) was sprayed on the dhool and mixed thoroughly. The dhool was then fermented (exposed to air at 25°C) for 90 minutes and then dried to a moisture content of less than 5% by weight (at 140°C) to obtain a black leaf tea product.

All the above tea products were then brewed using the following protocol.

### Hot Brew:

2g of tea leaves were brewed in 200 mL of distilled water at 95°C for 2 minutes to prepare infusions.

### Cold Brew:

2g of tea leaves were brewed in 200 mL of distilled water at 25°C for 2 minutes to prepare infusions.

The colours of the infusions were measured using the following protocol:
Colour measurement:
Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°- Observer angle. Measurements were made using a quartz cuvette of 10 mm path length. Tea infusions as prepared abovewas filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

The higher the a* value the redder is the infusion. In the same way the higher the b* value the brighter is the infusion.

The results of these experiments are summarized below in Table 1:

**Table1:**

| Example No. | Cold Brew | | Hot Brew | |
|---|---|---|---|---|
| | a* | b* | a* | b* |
| A | 2.0 | 31.4 | 6.2 | 70.0 |
| B | 2.3 | 31.9 | 6.4 | 66.8 |
| 1 | 11.2 | 61.3 | 22.3 | 72.4 |

From the above table it is evident that tea product obtained using the process of the present invention (example 1) provides significantly higher a* and b* value when compared to comparative examples (A and B).

Another set of tea products were prepared starting from finished leaf tea product and using the following procedure. For this purposed finished black leaf tea product (fannings grade) was obtained from Kenya.

### Example 2:

To the finished leaf tea product 2% (W/V) potassium bicarbonate solution was sprayed. Incubated the leaf tea product for 2 hours at 24°C. It was then dried to a moisture content of around 3%.

### Example C:

Example 2 was compared with the same fannings grade finished black leaf tea product obtained from Kenya, without treatment with base.

Infusions were prepared using the above products and colour was measured using the protocol as described in the previous section.

The results are summarized in Table 2.

**Table 2:**

| Example No. | Cold Brew | | Hot Brew | |
|---|---|---|---|---|
| | a* | b* | a* | b* |
| C | -0.8 | 20 | 11 | 71 |
| 2 | 0.2 | 27 | 22 | 76 |

It is evident that example 2 provides better infusion properties in terms of a* and b* value when compared with Example C.

## Claims

1. A process for producing a tea product comprising the steps of contacting tea leaves with 0.1 to 10% by weight of a base for about 30 minutes to 6 hours.

2. A process as claimed in claim 1 wherein the tea leaves are fresh tea leaves with moisture content of more than 65% by weight.

3. A process as claimed in claim 1 wherein the tea leaves are macerated tea leaves.

4. A process as claimed in claim 3 wherein the macerated tea leaves are produced by comminuting fresh tea leaves with moisture content of more than 65% by weight.

5. A process as claimed in claim 1 wherein the tea leaves are finished leaf tea products with moisture content of less than 5% by weight.

6. A process as claimed in claim 1 wherein the tea leaves are contacted with 0.1 to 10% by weight of a base directly before or during fermentation.

7. A process as claimed in any one of the preceding claims wherein the pKb value of the base is greater than 4.68.

8. A process as claimed in claim 7 wherein the base is selected from sodium carbonate, sodium bicarbonate, potassium carbonate, potassium bicarbonate and mixtures thereof.

9. A process as claimed in claim 8 wherein the base is potassium bicarbonate.

10. A process as claimed in any one of the preceding claims wherein the contacting time is from 70 minutes to 5 hours.

11. A process for producing a tea product comprising the steps of;
a) providing fresh tea leaves with moisture content of at least 65% by weight;
b) optionally, subjecting the incubated leaf to a step of comminution;
c) adding 1 to 10% by weight of a base to the comminuted tea leaves;
d) fermenting the comminuted tea leaves for about 30 minutes to 6 hours; and
e) drying the fermented tea leaves to obtain the tea product.

12. A process as claimed in claim 11 wherein there is an additional step of withering of fresh tea leaves.

13. A process for producing a tea product comprising the steps of;
a) providing a finished tea product with moisture content of less than 5%;
b) adding 1 to 10% by weight of a base to obtain a mix;
c) incubating the mix for about 30 minutes to 6 hours.

14. A process as claimed in claim 13 wherein the incubation time is in the range from 70 minutes to 5 hours.

15. A process as claimed in any one of the preceding claims wherein the base is selected from sodium carbonate, sodium bicarbonate, potassium carbonate, potassium bicarbonate and mixtures thereof.
